# EUROPEAN PATENT SPECIFICATION

(11) **EP 1 977 888 B1**
(45) Date of publication and mention of the grant of the patent: **03.04.2013**
(21) Application number: 07707345.0
(22) Date of filing: 24.01.2007
(51) Int. Cl.: B32B 27/30, B32B 27/00, C09J 123/26, C09J 179/00, C09J 187/00, B32B 7/12

(54) **LAMINATE**
LAMINAT
STRATIFIÉ

(30) Priority: 26.01.2006 JP 2006017450
(43) Date of publication of application: 08.10.2008
(73) Proprietor: Mitsui Chemicals, Inc., Tokyo 105-7117 (JP)
(72) Inventor: YASUI, Shigeyuki, Chiba 299-0108 (JP); FUNAKI, Setsuko, Chiba 299-0108 (JP); KITAHARA, Koji, Chiba 299-0108 (JP); MORI, Akihide, Chiba 299-0265 (JP); OOCHI, Hiroyasu, Chiba 299-0265 (JP)
(74) Representative: HOFFMANN EITLE
(86) International application number: PCT/JP2007/051098
(87) International publication number: WO 2007/086434

(56) References cited:
- EP-A1- 1 195 387
- WO-A1-00/73358
- WO-A1-2005/097840
- WO-A1-2006/040206
- WO-A1-2006/098290
- JP-A- 10 101 871
- JP-A- 11 207 840

## Description

### TECHNICAL FIELD

The present invention relates to a novel laminate. More specifically, the present invention relates to a laminate of an adhesive (A) having a carbodiimide and a fluorocopolymer (B).

### BACKGROUND ART

A fluororesin, such as a homopolymer (PTFE) of tetrafluoroethylene, a copolymer (ETFE) of tetrafluoroethylene and ethylene, and the like, has properties such as weatherability and flame retardancy, especially an excellent barrier property against hydrocarbons, alcohols and the like, and properties capable of being used as a fuel pipe of an automobile, and the like. However, PTFE and ETFE require a molding temperature of 300°C or higher and have poor workability. In order to improve this point, there has been developed a ternary fluorocopolymer (fluororesin) obtained by copolymerizing tetrafluoroethylene, vinylidene fluoride and hexafluoropropylene (trade name: THV, produced by Dyneon L.L.C.). This fluororesin has good workability in addition to the above excellent properties. However, the above conventional fluororesin adheres to an epichlorohydrin rubber and the like by thermal compression molding, but exhibits little adhesiveness to a polyolefin resin, anhydrous maleic acid-graft modified polyethylene which is widely used as an adhesive resin, and the like.

Incidentally, in Patent Document 1, there is disclosed a method in which a composition containing an aliphatic polyamine is coated on the surface of a layer containing a fluoropolymer or a layer containing a hydrocarbon polymer and then the two layers are laminated to bond the layer containing a fluoropolymer and the layer containing a hydrocarbon polymer. However, in the method of the above-mentioned publication, the operations are complicated because the polyamine coating is indispensable, and the two layers were difficult to bond together, for example, by a simple method such as a coextrusion molding method and the like.

In addition, in Patent Document 2, there is described a composition containing a diamine compound as an adhesive which can be molded by coextrusion molding. However, since there is a case where the adhesion strength is sometimes practically insufficient, an adhesive showing a higher adhesion strength has been demanded.
Patent Document 1: WO1996/05964 (Japanese Patent Application Laid-Open No. H10-504595)
Patent Document 2: WO2000/73358 (Japanese Patent Application No. 2001-500682

### DISCLOSURE OF THE INVENTION

### PROBLEMS TO BE SOLVED BY THE INVENTION

The problem of the present invention is to provide a laminate having an excellent interlaminar adhesion strength with a fluorocopolymer even when the laminate is molded by a coextrusion molding method, and further to provide a laminate which can be used more than enough even at high temperatures or in applications where the laminate comes into contact with oil, gasoline or the like, by controlling various properties of the adhesive layer.

### MEANS FOR SOLVING THE PROBLEMS

The present inventors have made earnest studies in order to solve the above problems and accomplished the following invention.

In other words, the present invention is a laminate of at least two or more layers containing a structure obtained by bonding and laminating an adhesive (A) defined by the following (i) to (iii) and a fluorocopolymer (B) containing at least two kinds of monomers selected from the group consisting of a monomer represented by the following formulas (1) and (2) and ethylene or propylene, wherein the adhesive (A) is an adhesive
(i) obtained by allowing a polyolefin (a) having a group reactive with a carbodiimide group to react with a compound (b) having a carbodiimide group,
(ii) having a ratio of peak intensity at 2130 to 2140 cm⁻¹ to peak intensity at 1470 cm⁻¹ of 60% or lower in infrared absorption spectroscopy, and
(iii) having a density of 0.870 to 0.940 g/cm³.

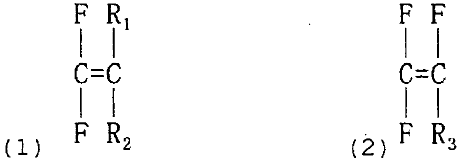

In the formula (1), R₁ and R₂ each independently represent a hydrogen atom or fluorine atom.

In the formula (2), R₃ represents a substituent represented by CₙH₂ₙ₊₁ (in which n is an integer of 1 or more).

A monomer represented by the formula (1) is preferably tetrafluoroethylene, trifluoroethylene and/or vinylidenefluoride, and a monomer represented by the formula (2) is preferably hexafluoropropylene, octafluorobutene-1 and/or dodecafluorohexene-1.

In addition, the fluorocopolymer is preferably at least one kind selected from the group consisting of a ternary fluorocopolymer obtained by copolymerizing tetrafluoroethylene, vinylidene fluoride and hexafluoropropylene; a homopolymer (PTFE) of tetrafluoroethylene; and a copolymer (ETFE) of tetrafluoroethylene and ethylene.

A laminate of the present invention is preferably produced by a coextrusion molding method.

### EFFECT OF THE INVENTION

A laminate of the present invention has an excellent interlaminar adhesion strength with a fluorocopolymer even when it is molded by a coextrusion molding method, and there may be obtained a laminate which is used more than enough even at high temperatures or in applications where the laminate comes into contact with oil, gasoline or the like.

### BEST MODE FOR CARRYING OUT THE INVENTION

Hereinafter, the present invention will be explained in more detail.
A laminate of at least two or more layers containing a structure obtained by bonding and laminating an adhesive (A) defined by the following (i) to (iii) and a fluorocopolymer (B) containing at least two kinds of monomers selected from the group consisting of a monomer represented by the following formulas (1) and (2) and ethylene or propylene.
Adhesive (A) is an adhesive
(i) obtained by allowing a polyolefin (a) having a group reactive with a carbodiimide group to react with a compound (b) having a carbodiimide group,
(ii) having a ratio of peak intensity at 2130 to 2140 cm⁻¹ to peak intensity at 1470 cm⁻¹ of 60% or lower in infrared absorption spectroscopy, and
(iii) having a density of 0.870 to 0.940 g/cm³.

Hereinafter, each component constituting a laminate of the present invention will be explained.

### (A) Adhesive

### (Polyolefin (a) having a group reactive with a carbodiimide group)

A polyolefin (A), which is used in the present invention and has a group reactive with a carbodiimide group, may be obtained by introducing a compound (m) having a group reactive with a carbodiimide group into a polyolefin.

Examples of the compound (m) having a group reactive with a carbodiimide group include a compound having a group which has an active hydrogen having reactivity with a carbodiimide group, and specifically is a compound having a group derived from a carboxylic acid, amine, alcohol, thiol and the like. Among them, preferably used is a compound having a group derived from a carboxylic acid, and above all, an unsaturated carboxylic acid and/or its derivative are especially preferable. In addition to a compound having a group which has an active hydrogen, there may be preferably used a compound having a group which is easily converted into a group having an active hydrogen by water and the like, and there may be specifically mentioned a compound having an epoxy group and a glycidyl group. In the present invention, a compound (m) having a group reactive with a carbodiimide group may be used singly or in combination of two or more kinds thereof.

In the present invention, when an unsaturated carboxylic acid and/or its derivative are used as the compound (m) having a group reactive with a carbodiimide group, there may be mentioned an unsaturated compound having one or more carboxylic acid groups, an unsaturated compound having one or more anhydrous carboxylic acid groups and derivatives thereof, and as the unsaturated group, there may be mentioned a vinyl group, a vinylene group, an unsaturated cyclic hydrocarbon group and the like. As the specific compound, there may be mentioned an unsaturated carboxylic acid such as acrylic acid, methacrylic acid, maleic acid, fumaric acid, tetrahydrophthalic acid, itaconic acid, citraconic acid, crotonic acid, isocrotonic acid, norbornene dicarboxylic acid, bicyclo[2,2,1]hept-2-ene-5,6-dicarboxylic acid and the like, or an acid anhydride thereof or a derivative (for example, acid halide, amide, imide, ester and the like) thereof. Examples of the specific compound include malenyl chloride, malenyl imide, maleic anhydride, itaconic anhydride, citraconic anhydride, tetrahydrophthalic anhydride, bicyclo[2,2,1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2,2,1]hept-2-ene-5,6-dicarboxylate, hydroxyethyl (meth) acrylate, hydroxypropyl (meth)acrylate, glycidyl (meth)acrylate, aminoethyl methacrylate, aminopropyl methacrylate and the like. These unsaturated carboxylic acids and/or derivatives thereof may be used singly or in combination of two or more kinds thereof.

Among them, preferred are maleic anhydride, (meth) acrylic acid, itaconic anhydride, citraconic anhydride, tetrahydrophthalic anhydride, bicyclo[2,2,1]hept-2-ene-5,6-dicarboxylic anhydride, hydroxyethyl (meth)acrylate, glycidyl methacrylate, aminopropyl methacrylate. Further, especially preferred are dicarboxylic acid anhydrides such as maleic anhydride, itaconic anhydride, citraconic anhydride, tetrahydrophthalic anhydride, bicyclo[2,2,1]hept-2-ene-5,6-dicarboxylic anhydride and the like.

### (Introduction method)

As a method of introducing a compound (m) having a group reactive with a carbodiimide group into a polyolefin, a publicly known method may be adopted. For instance, there may be exemplified by a method of graft-coplymerizing a compound (m) having a group reactive with a carbodiimide group onto a polyolefin main chain or a method of radical-coplymerizing a compound (m) having a group reactive with a carbodiimide group with an olefin, or the like.

Hereinafter, the introduction methods for graft copolymerization and radical copolymerization will be described in detail separately.

### 1. Graft copolymerization

In the case of obtaining the polyolefin (a) having a group reactive with a carbodiimide group used in the present invention by graft copolymerization, the polyolefin (a) may be obtained by graft copolymerizing a compound having a group reactive with a carbodiimide group and another ethylenically unsaturated monomer and the like, if necessary, onto the polyolefin main chain in the presence of a radical initiator.

The polyolefin is a polymer containing as a main component an aliphatic α-olefin having 2 to 20 carbon atoms, a cyclic olefin and an unconjugated diene, and is a polymer containing, as a main component, preferably an α-olefin having 2 to 10 carbon atoms and more preferably an α-olefin having 2 to 8 carbon atoms. These olefins may be used singly or in combination of two or more kinds thereof and the content of the olefin as a comonomer is typically 50 mol% or less, preferably 40 mol% or less and more preferably 30 mol% or less. Among the polyolefins in which the content of the olefin is within the above range, preferred is a crystalline polyolefin such as polyethylene, polypropylene, polybutene-1, poly-4-methylpentene-1 and an α-olefin copolymer thereof and the like, and more preferred is polyethylene or polypropylene. In addition, both one having an isotactic structure and one having a syndiotactic structure may be used, and there is no particular limitation on stereoregularity.

The polyolefin has a density of typically from 0.8 to 1.1 g/cm³, preferably 0.8 to 1.05 g/cm³ and more preferably 0.8 to 1.0 g/cm³. The polyolefin has a melt flow rate (MFR) of typically 0.01 to 500 g/10 min, preferably 0.05 to 200 g/10 min and more preferably 0.1 to 100 g/10 min, as measured at 190°C under a load of 2.16 kg according to ASTM D1238. When the density and MFR of the polyolefin are within these ranges, the density and MFR of the graft copolymer after modification are almost the same as those of the polyolefin, making it easy to handle.

In addition, the polyolefin has a crystallinity of typically 2% or higher, preferably 5% or higher and more preferably 10% or higher. When the crystallinity is within this range, the graft copolymer after modification is excellent in handling properties.

The polyolefin has a number average molecular weight (Mn) of preferably 5000 to 500,000 and more preferably 10,000 to 100,000, as measured by a gel permeation chromatography (GPC). When the number average molecular weight (Mn) is within this range, the polyolefin is excellent in handling properties. Note that, in the ethylene-based polyolefin, the number average molecular weight is determined in terms of polyethylene when the comonomer amount is 10 mol% or less and in term of ethylene-propylene (based on an ethylene content of 70 mol%) when the comonomer amount is 10 mol% or more.

The above polyolefin may be produced by any conventional method and, for example, may be produced by polymerization using a titanium-based catalyst, a vanadium-based catalyst, a metallocene catalyst and the like. Further, the polyolefin used in the graft modification may be any form of a resin and an elastomer, and both one having an isotactic structure and one having a syndiotactic structure may be used. There is no particular limitation on stereoregularity. A commercially available resin may be used as received.

There is no particular limitation on the method of graft polymerizing a compound having a group reactive with a carbodiimide group onto the polyolefin main chain, and there may be adopted a conventional graft polymerization method such as a solution method, a melt-kneading method and the like.

### 2. Radical copolymerization

The polyolefin (a) having a group reactive with a carbodiimide group in the present invention may also be obtained by radical-copolymerizing an olefin and the compound (m) having a group reactive with a carbodiimide group. As the olefin, there may be employed the same olefin as in the case of forming the above-described polyolefin used as a main chain for grafting, and in addition, the compound (m) having a group reactive with a carbodiimide group is the same as described above.

There is no particular limitation on the method of copolymerizing an olefin and a compound having a group reactive with a carbodiimide group, and a publicly known radical copolymerization method may be employed.

The content of the compound (a) having a group reactive with a carbodiimide group in the polyolefin (a) having a group reactive with a carbodiimide group used in the present invention, is typically 0.1 to 10% by weight, preferably 0.1 to 3.0% by weight and more preferably 0.1 to 2.0% by weight. When the content of the compound (m) having a group reactive with a carbodiimide group exceeds the above range, the compound (m) is crosslinked with the carbodiimide group-containing compound (b), thus making it difficult to produce the adhesive (A) . The above polymerization may be carried out so that the content of the compound (m) is within the above range.

In addition, the polyolefin (a) having a group reactive with a carbodiimide group has a density of typically from 0.870 to 0.940 g/cm³, preferably from 0.875 to 0.940 g/cm³ and more preferably from 0.880 to 0.940 g/cm³. The density is measured in accordance with JIS K7112.

### Carbodiimide group-containing compound (b)

The carbodiimide group-containing compound (B) used in the present invention is a polycarbodiimide having a repeating unit represented by the following general formula (3).

-N=C=N-R₁- (3)

[wherein R₁ represents a divalent organic group having 2 to 40 carbon atoms.]
The polycarbodiimide may be produced by performing the decarbonation condensation reaction of an organic diisocyanate such as aliphatic diisocyanate, aromatic diisocyanate, alicyclic diisocyanate and the like in the presence of a condensation catalyst without solvent or in an inert solvent. The diisocyanate is used singly or plural diisocyanates are used as a mixture. Examples of such diisocyanates include hexamethylene diisocyanate, 4,4-diphenylmethane diisocyanate, 1,4-phenylene diisocyanate, 2,4-trilene diisocyanate, xylilene diisocyanate, cyclohexane-1,4-diisocyanate, dicyclohexylmethane-4,4'-diisocyanate, isophorone diisocyanate and the like. In the decarbonation condensation reaction, the polymerization degree of polycarbodiimide may be controlled by selecting a catalyst, reaction temperature, terminal-sealing agent and the like. There is used a polycarbodiimide having a polymerization degree of typically 2 to 40 and preferably 4 to 20. As the terminal-sealing agent, there may used a monoisocyanate such as phenylisocyanate, tolylisocyanate, naphthylisocyanate and the like, and an active hydrogen compound such as methanol, ethanol, diethylamine, cyclohexylamine, succinic acid, benzoic acid, ethylmercaptane and the like. As the condensation catalyst, there may be used an alcoholate of titanium, hafnium, zirconium, sodium, calcium and the like, and an organic phosphorus compound such as phospholene oxide and the like.

The carbodiimide group-containing compound (B) used in the present invention has a number average molecular weight of typically 400 to 500,000, preferably 700 to 10,000 and more preferably 1, 000 to 4, 000, in terms of polystyrene, as measured by a gel permeation chromatography (GPC) . The number average molecular weight within the above range is preferable since the resulting adhesive is excellent in adhesion strength.

The carbodiimide group-containing compound (b) used in the present invention may contain a monocarbodiimide in polycarbodiimide. One of the compound (b) may be used singly or a mixture of the compounds (b) may be used.

Further, commercially available carbodiimide group-containing compounds may be used as received. Examples of the commercially available carbodiimide group-containing compound include Carbodilite HMV-8CA, LA1 and the like which are produced by Nisshinbo Industries Inc.

In addition, the content of the carbodiimide group of an adhesive in the present specification may be measured by C-NMR spectroscopy, IR spectroscopy, a titration method and the like and may be regarded as an equivalent of a carbodiimide. The peak may be observed at 130 to 142 ppm by C-NMR spectroscopy and 2130 to 2140 cm⁻¹ by IR spectroscopy.

### Adhesive (A)

The adhesive (A) used in the present invention may be obtained by allowing a polyolefin (a) having a group reactive with a carbodiimide group to react with a carbodiimide group-containing compound (b) preferably at 230 °C or higher. Specifically, the adhesive (A) may be obtained by melt kneading such as melt modification, but the method of production is not limited to this method.

Hereinafter, the melting and mixing method will be described. The method of allowing (a) to react with (b) as mentioned above preferably at 230°C or more is not particularly limited and the adhesive (A) may be obtained by charging (a) and (b) in, for example, a Henschel mixer, a V blender, a tumbler blender, a ribbon blender or the like, followed by kneading, and further followed by melt kneading with a single screw extruder, a multiple screw extruder, a kneader, a Banbury mixer or the like. Among these apparatuses, preferable is the use of an apparatus having excellent kneading performance, such as a multiple screw extruder, a kneader and a Banbury mixer since there is obtained a polymer composition in which each component has been more homogeneously dispersed and allowed to react.

As a method of feeding (a) and (b), there may be adopted either a method of supplying the whole of (a) and (b) from a hopper after mixing in advance or a method of supplying part of the components of (a) and (b) from a hopper and the rest of the components of (a) and (b) from a supply port disposed at an optional portion between the vicinity of the hopper portion and the top of an extruder.

As for the temperature in melt kneading the above each component, the reaction may be carried out at a temperature of the highest melting point or higher among the melting points of each component to be mixed. Specifically, the melt kneading is conducted in the range of typically 180 to 300°C, preferably 230 to 280°C, and more preferably 235 to 270°C.

In producing the adhesive (A), the blending amount of the carbodiimide group-containing compound (b) is controlled so that the content of the carbodiimide group is typically from 0.1 to 50 mmol, preferably from 0.2 to 40 mmol and more preferably from 0.5 to 30 mmol, based on 100 g of the adhesive (A) obtained by allowing the polyolefin (a) having a group reactive with a carbodiimide group to react with the carbodiimide group-containing compound (b). The content of the carbodiimide group within the above range is preferable since the adhesive (A) is excellent in adhesiveness and the crosslinking with the polyolefin (a) is suppressed.

In addition, as to the adhesive (A), upon the reaction of the carbodiimide group (NCN) of the polycarbodiimide with the compound (m) having a group reactive with a carbodiimide group as mentioned above, a certain amount of the carbodiimide group is consumed during the reaction and the carbodiimide residue bonded to the polyolefin group as the same molecular chain contributes to adhesiveness to the fluorocopolymer (B).

The amount of the carbodiimide residue may be regarded as the magnitude of the peak due to contracting vibration of the N=C=N group at 2130 to 2140 cm⁻¹ by IR measurement. The magnitude of the peak is preferably 60% or less and more preferably 50% or less (excluding zero percent) of the value of the ratio (percentage), in which the peak at 1470 cm⁻¹ due to scissor bending vibration of the CH₂ of a polyolefin is used as the internal peak (that is 100%). When the ratio exceeds the above range, excessive free carbodiimide groups are present in the adhesive, thereby lowering the adhesion performance and molding and processing properties.

The adhesive (A) of the present invention may contain other unmodified polyolefins in addition to the polyolefin (a) having a group reactive with a carbodiimide group as long as the objective of the present invention is not impaired. In addition, to the adhesive (A) of the present inventionmay be added publicly known additives such as a process stabilizer, a heat resistant stabilizer, a heat aging resistant agent, a filler and the like.

### Adhesive (c)

In the present invention, what is called an adhesion imparter is preferably blended in an adhesive, especially for the purpose of imparting adhesiveness. As a material imparting adhesiveness, there may be mentioned, for example, a rosin derivative, a terpene resin, a petroleum resin and a hydrogenated product thereof. Among them, a hydrogenated terpene resin and a hydrogenated petroleum resin are preferred. In the adhesive (A), the adhesive imparter is preferably blended in an amount of 0 to 30% by weight.

In addition, a modified resin having a group reactive with a carbodiimide group, for example, a maleic acid-modified resin and an imine-modified resin may be blended. Among them, maleic acid-modified ethylene-butene copolymer, maleic acid-modified ethylene-propylene copolymer, maleic acid-modified ethylene-octene copolymer, maleic acid-modified styrene-butene-butene-styrene copolymer, maleic acid-modified styrene-ethylene-butene-styrene copolymer, imine-modified styrene-butene-butene-styrene copolymer and imine-modified styrene-ethylene-butene-styrene copolymer are preferred.

### Fluorocopolymer (B).

The fluorocopolymer (B) used in the present invention is a polymer or copolymer having a fluorine atom, and is specifically exemplified by a ternary fluorocopolymer obtained by copolymerizing tetrafluoroethylene, vinylidene fluoride and hexafluoropropylene, a homopolymer (PTFE) of tetrafluoroethylene, a copolymer (ETFE) of tetrafluoroethyelene and ethylene, a homopolymer or copolymer containing as a monomer a compound represented by the following formula (1) or (2), and the like.

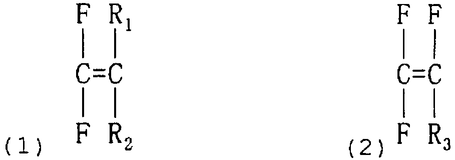

In the formula (1), R₁ and R₂ each independently represent a hydrogen atom or fluorine atom.

In the formula (2), R₃ represents a substituent represented by CₙF₂ₙ₊₁ (here, n is an integer of 1 or more)

Concrete examples of the monomer represented by the above formula (1) include tetrafluoroethylene, trifluoroethylene, vinylidene fluoride and the like. Concrete examples of the monomer represented by the above formula (2) include hexafluoropropylene, octafluorobutene-1, dodecafluorohexene-1 and the like.

Among the above fluororesins (C), as the fluororesin (C) providing especially strong adhesion strength, a fluorocopolymer containing at least two monomers selected from the group consisting of a monomer represented by the above formula (1), a monomer represented by the above formula (2) and ethylene or propylene is preferred, and more preferred is a fluorocopolymer containing at least one monomer represented by the above formula (1) and at least one monomer represented by the above formula (2).

The former fluorocopolymer is exemplified by a copolymer (ETFE) of tetrafluoroethylene and ethylene and the latter fluorocopolymer is exemplified by a copolymer of vinylidene fluoride and hexafluoropropylene, a copolymer of tetrafluoroethylene and vinylidene fluoride and hexafluoropropylene, and the like.

The fluorocopolymer (C) as mentioned above may be produced by polymerizing a monomer represented the above formula (1), a monomer represented the above formula (2) and a monomer such as ethylene by a publicly known method. For example, the fluorocopolymer may be produced by polymerizing a monomer by a polymerization method such as a solution polymerization, a suspension polymerization, an emulsification polymerization and the like in a pressurized autoclave. In addition, the fluorocopolymer (C) may be grafted with a compound containing a group having reactivity or polarity such as a carbonyl group, an epoxy group, an amine group and the like by a method of using a radical generating agent, and the like, and may have the group at the terminal. The representative examples of the fluorocopolymer (C) thus obtained include THV (trade name, a ternary fluorocopolymer obtained by copolymerizing tetrafluoroethylene, vinylidene fluoride and hexafluoropropylene, produced by Dyneon L.L.C.) and Fluon (TM) LM-ETFE AH (trade name, produced by Asahi Glass Co., Ltd.) and NEOFLON TM EFEP (trade name, produced by Daikin Industries Ltd.).

### Multilayer Laminate

The laminate of the present invention is characterized by being a multilayer laminate of at least two or more layer containing a structure obtained by bonding and laminating the adhesive (A) and the fluorocopolymer (B). Any layer configuration may be used as long as the above requirement is satisfied.

In addition, any production method may be applied to the production of the laminate of the present invention.

For example, the multilayer laminate may be produced by forming an adhesive layer by applying the molten adhesive (A) on a sheet or film of the fluorocopolymer (B) which has been already molded and processed and then bringing into contact and compressing a sheet or film of the fluorocopolymer (B) and/or another resin through the adhesive layer. In addition, conversely, the multilayer laminate may be produced by forming the adhesive layer by applying the molten adhesive (A) on a sheet or film of another resin which has been molded and processed and then bringing into contact and compressing a sheet or film of the fluorocopolymer (B) through the adhesive layer.

Furthermore, as a method for continuously forming the multilayer laminate, a publicly known method such as blow molding, injection molding, and extrusion molding may be used to produce the multilayer laminate by melting the fluorocopolymer (B) of each layer and another resin if needed and then laminating them in a molten state through the molten adhesive (A). A coextrusion molding method is especially preferable.

The other resin is not particularly limited and is exemplified by polyolefin, polylactic acid, polycarbonate, polyester, polyamide, ethylene-vinylalcohol copolymer and the like.

The combination of the laminate of the present invention is exemplified by a laminate such as fluorocopolymer/adhesive, adhesive/fluorocopolymer/adhesive, adhesive/fluorocopolymer/adhesive/polyolefin, polyolefin/adhesive/fluorocopolymer/adhesive/polyolefin, polylactic acid/adhesive/fluorocopolymer, polycarbonate/adhesive/fluorocopolymer, polyester/adhesive/fluorocopolymer, ethylene-vinylalcohol copolymer/adhesive/fluorocopolymer, and polyamide/adhesive/fluorocopolymer and the like..

### [Examples]

Hereinafter, the present invention will be further specifically explained with reference to Examples and Comparative Example, but the present invention is not limited by these Examples, as long as the gist of the present invention is not exceeded.

### (Various Measurement Methods)

In the Examples and the like, measurements were performed according to the following methods.

### [Melt Flow Rate (MFR)]

The melt flow rate was measured at 190°C under a load of 2.16 kg in accordance with ASTM D1238.

### [Interlayer Adhesion Strength of Film]

The interlayer adhesion strength between the fluorocopolymer layer and the adhesive layer was evaluated by a T-peeling method in a 5-layered laminate of high density polyethylene/adhesive resin/fluorocopolymer/adhesive resin/high density polyethylene. The evaluation was performed using a tensile tester under an atmosphere at 23 °C and under an atmosphere at 100 °C. The crosshead speed was set at 50 mm/min.

### [Density]

The density was measured in accordance with JIS K7112.

### [Polyolefin Used]

The polyolefin used in Examples and Comparative Example is described below. It should be noted that these polymers were prepared by conventional polymerization methods unless otherwise specified.

PE-1: Linear low density polyethylene (LLDPE)
   (Melt flow rate: 2.0, Density: 0.922 g/cm³)
PE-2: LLDPE
   (Melt flow rate: 2.0, Density: 0.885 g/cm³)
PE-3: High density polyethylene (HDPE)
   (Melt flow rate: 3.0, Density: 0.963 g/cm³)
PE-4: LLDPE
   (Melt flow rate: 2.0, Density: 0.860 g/cm³)

### (Example 1)

### <Production of polyolefin (A) having a group reactive with a carbodiimide group>

An acetone solution dissolving 1 part by weight of maleic anhydride (produced by Wako Pure Chemical Industries, Ltd., hereinafter abbreviated as MAH), and 0.06 part by weight of 2,5-dimethyl-2,5-bis(t-butylperoxy)hexane (trade name: PERHEXA 25B, produced by NOF CORPORATION) were dry blended into 100 parts by weight of PE-1 (LLDPE, produced by Mitsui Chemicals, Inc.). Thereafter, the blend was extruded by using a biaxial extruder (TEX-30, manufactured by The Japan Steel Works, LTD.) at a resin temperature of 250 °C, a screw rotation speed of 200 rpm and a discharge rate of 100 g/min to obtain a maleic acid-modified polyethylene (hereinafter abbreviated as MAH-PE). MAH-PE thus obtained was dissolved in xylene and reprecipitated in acetone to purify. The grafted amount of maleic anhydride was determined to be 0.96% by weight.

### <Production of adhesive>

80 parts by weight of PE-2 (LLDPE, produced by Mitsui Chemicals, Inc.), 10 parts by weight of PE-3 (HDPE, produced by Mitsui Chemicals, Inc.) and 3 parts by weight of polycarbodiimide (trade name: Carbodilite HMV-BCA, produced by Nisshinbo Industries, Inc.) based on the total weight of MAH-PE-1, PE-2 and PE-3 were blended to 10 parts by weight of MAH-PE-1 produced above. Thereafter the compound was molten and kneaded with a monoaxial extruder having a screw diameter of 65 mm (manufactured by Modern Machinery) at 250 °C (retention time=2 minutes) to produce an adhesive.

### <Production of laminate>

As the fluorocopolymer, "THV500G" (produced by Dyneon L.L.C.) was used. As the polyolefin resin layer, HDPE having a MFR of 0.4 and a density of 0.950 g/cm³ was used.

A laminate having a structure of HDPE/adhesive resin/fluorocopolymer/adhesive resin/HDPE was prepared by coextrusion molding using a 4-kind 5-layer sheet molding machine (produced by EDI). There were used an extruder for an HDPE layer having a screw diameter of 50 mm, an extruder for an adhesive resin layer having a screw diameter of 40 mm and an extruder for a fluorocopolymer layer having a screw diameter of 30 mm. The drawing line speed was set at 1 m/min to prepare a laminate containing HDPE/adhesive resin/fluorocopolymer/adhesive resin/HDPE= 350/50/50/50/350 µm.

### <Evaluation of adhesion strength of laminate>

The laminate produced above was cut in a width of 15 mm and the adhesion strength (unit: N/15 mm) at the interface between a fluorocopolymer layer and an adhesive layer was measured at a room temperature of 23°C and at 100 °C by a T-peeling method using a tensile tester. The crosshead speed was set at 50 mm/min.

### (Example 2 and Comparative Example 1)

Adhesives were produced in the same manner as in Example 1 according to the blending formulas shown in Table 1. The measurement and evaluation results of the laminates obtained are shown in Table 1.

**[Table 1]**

| Blending formula | Example 1 | Example 2 | Comparative Example 1 |
|---|---|---|---|
| PE-1 (MFR=2.0 g/10min, Density=0.922 g/cm³) | | 45 | |
| PE-2 (MFR=2.0 g/10min, Density=0.885 g/cm³) | 80 | 45 | 80 |
| PE-3 (MFR=3.0 g/10min, Density=0.963 g/cm³) | 10 | | 10 |
| MAE-PE-1 (Density=0.922 g/cm³) | 10 | | 10 |
| MAH-PE-3 (Density=0.963 g/cm³) | | 10 | |
| Polycarbodiimide | 3 | 3 | |
| Total Number | 103 | 103 | 100 |
| Density of the composition (g/cm³) | 0.896 | 0.909 | 0.896 |
| The ratio of the peak intensity at 2130 to 2140 cm⁻¹/ the peak intensity at 1470 cm⁻¹ (%) | 44 | 44 | - |
| Peeling strength at 23°C (N/15 mm) | 29 | 26 | 0.9 |
| Peeling strength at 100°C (N/15 mm) | 5 | 10 | 0.2 |

### INDUTRIAL APPLICABILITY

The present invention may provide a laminate which has excellent interlaminar adhesion strength with a fluorocopolymer even when molded by a coextrusion molding method and furthermore is used more than enough even at high temperatures or in applications where the laminate comes into contact with oil, gasoline or the like. The application of the laminate of the present invention is not particularly limited, but the laminate may be used especially for the applications requiring high-temperature adhesiveness and gasoline resistant property, for example, for a fuel tank, a fuel pipe and the like of an automobile.

## Claims

1. A laminate of at least two or more layers comprising a structure obtained by bonding and laminating an adhesive (A) defined by the following (i) to (iii) and a fluorocopolymer (B) which is a copolymer containing at least two kinds of monomers selected from the group consisting of a monomer represented by the following formulas (1) and (2) and ethylene or propylene or a homopolymer containing a monomer represented by the formula (1) or (2); the adhesive (A)
(i) obtained by allowing a polyolefin (a) having a group reactive with a carbodiimide group to react with
a polycarbodiimide (b),
(ii) having a ratio of peak intensity at 2130 to 2140 cm⁻¹ to peak intensity at 1470 cm⁻¹ of 60% or lower (excluding zero percent) in infrared absorption spectroscopy, and
(iii) having a density of 0.870 to 0.940 g/cm³, 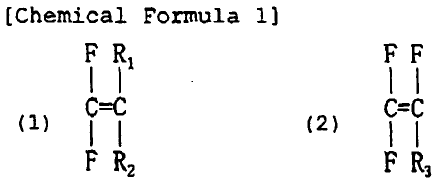
in the formula (1), R₁ and R₂ each independently represent a hydrogen atom or fluorine atom,
in the formula (2), R₃ represents a substituent represented by CₙH₂ₙ₊₁ (, in which n is an integer of 1 or more).

2. The laminate according to claim 1, wherein a monomer represented by the formula (1) is tetrafluoroethylene, trifluoroethylene and/or vinylidenefluoride, and a monomer represented by the formula (2) is hexafluoropropylene, octafluorobutene-1 and/or dodecafluorohexene-1.

3. The laminate according to claim 1, wherein the fluorocopolymer (B) is at least one kind selected from the group consisting of a ternary fluorocopolymer obtained by copolymerizing tetrafluoroethylene, vinylidene fluoride and hexafluoropropylene, a homopolymer (PTFE) of tetrafluoroethylene, and a copolymer (ETFE) of tetrafluoroethylene and ethylene.

4. The laminate according to claim 1, wherein the laminate is obtained by laminating by a coextrusion molding method.

## Patentansprüche

1. Laminat von wenigstens zwei oder mehreren Schichten, umfassend eine Struktur, die durch Binden und Laminieren eines Klebstoffs (A), definiert wie folgt durch (i) bis (iii), und eines Fluorcopolymers (B) erhalten wird, wobei (B) ein Copolymer ist, das wenigstens zwei Arten von Monomeren enthält, ausgewählt aus der Gruppe bestehend aus einem Monomer, dargestellt durch die folgenden Formeln (1) und (2), und Ethylen oder Propylen oder einem Homopolymer, das ein Monomer, dargestellt durch die Formeln (1) oder (2), enthält; wobei der Klebstoff (A)
(i) durch Umsetzen eines Polyolefins (a) mit einer Gruppe, die gegenüber einer Carbodiimidgruppe reaktiv ist, mit einem Polycarbodiimid (b) gewonnen wird,
(ii) im Infrarotabsorptionsspektrum ein Verhältnis Peakintensität bei 2.130 bis 2.140 cm⁻¹ zu Peakintensität bei 1.470 cm⁻¹ von 60 % oder weniger (mit Ausnahme von null Prozent) besitzt und
(iii) eine Dichte von 0,870 bis 0,940 g/cm³ besitzt, 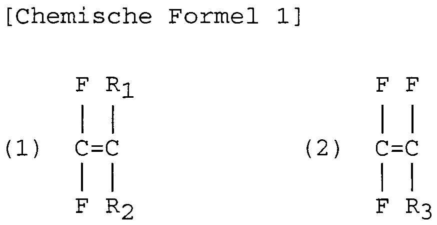
in der Formel (1) stellen R₁ und R₂ jeweils unabhängig voneinander ein Wasserstoffatom oder ein Fluoratom dar,
in der Formel (2) stellt R₃ einen Substituenten dar, dargestellt durch CₙH₂ₙ₊₁ (wobei n eine ganze Zahl von 1 oder größer ist).

2. Laminat gemäß Anspruch 1, wobei ein Monomer, dargestellt durch die Formel (1), Tetrafluorethylen, Trifluorethylen und/oder Vinylidenfluorid ist und ein Monomer, dargestellt durch die Formel (2), Hexafluorpropylen, Octafluorbuten-1 und/oder Dodecafluorhexen-1 ist.

3. Laminat gemäß Anspruch 1, wobei das Fluorcopolymer (B) wenigstens ein Typ ausgewählt aus der Gruppe bestehend aus einem ternären Fluorcopolymer, das durch Copolymerisieren von Tetrafluorethylen, Vinylidenfluorid und Hexafluorpropylen gewonnen wird, ein Homopolymer (PTFE) von Tetrafluorethylen und ein Copolymer (ETFE) von Tetrafluorethylen und Ethylen ist.

4. Laminat gemäß Anspruch 1, wobei das Laminat durch Laminieren über ein Co-Extrusionsschmelzverfahren gewonnen wird.

## Revendications

1. Stratifié d'au moins deux couches ou plus comprenant une structure obtenue en collant et en stratifiant un adhésif (A) défini par les (i) à (iii) suivants et un copolymère fluoré (B) qui est un copolymère contenant au moins deux espèces de monomères choisis parmi le groupe consistant en un monomère représenté par les formules (1) et (2) suivantes et l'éthylène ou le propylène ou un homopolymère contenant un monomère représenté par la formule (1) ou (2) ; l'adhésif (A)
(i) obtenu en laissant une polyoléfine (a) ayant un groupe réactif avec un groupe carbodiimide réagir avec un polycarbodiimide (b),
(ii) ayant un rapport d'une intensité de pic à 2 130 à 2 140 cm⁻¹ sur une intensité de pic à 1 470 cm⁻¹ de 60% ou moins (à l'exclusion de zéro pour cent) dans une spectroscopie par absorption dans l'infrarouge, et
(iii) ayant une densité de 0,870 à 0,940 g/cm³, 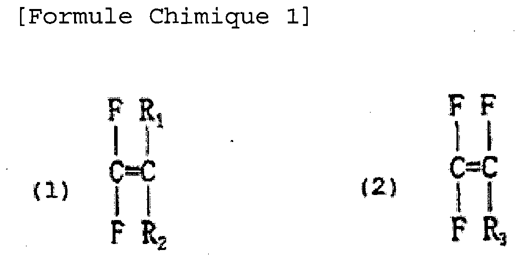
dans la formule (1), R₁ et R₂ représentent chacun indépendamment un atome d'hydrogène ou un atome de fluor,
dans la formule (2), R₃ représente un substituant représenté par CₙH₂ₙ₊₁ (dans laquelle n est un entier de 1 ou plus).

2. Stratifié selon la revendication 1, dans lequel un monomère représenté par la formule (1) est un tétrafluoroéthylène, un trifluoroéthylène et/ou un fluorure de vinylidène, et un monomère représenté par la formule (2) est un hexafluoropropylène, un octafluorobutène-1 et/ou un dodécafluorohexène-1.

3. Stratifié selon la revendication 1, dans lequel le copolymère fluoré (B) est au moins une espèce choisie parmi le groupe consistant en un copolymère fluoré ternaire obtenu par copolymérisation de tétrafluoroéthylène, de fluorure de vinylidène et d'hexafluoropropylène, un homopolymère (PTFE) de tétrafluoroéthylène, et un copolymère (ETFE) de tétrafluoroéthylène et d'éthylène.

4. Stratifié selon la revendication 1, dans lequel le stratifié est obtenu par stratification par un procédé de moulage par co-extrusion.
